# EUROPEAN PATENT SPECIFICATION

(11) **EP 3 031 501 B1**
(45) Date of publication and mention of the grant of the patent: **10.04.2024**
(21) Application number: 14853478.7
(22) Date of filing: 03.09.2014
(51) Int. Cl.: A63F 9/02, A63F 9/24, A63F 13/795, A63F 13/216, A63F 13/245, F41J 3/02

(54) **OFFLINE MATCH MAKING METHOD, DEVICE, AND COMPUTER-READABLE MEDIUM**
OFFLINE-SPIELVERMITTLUNGSVERFAHREN, VORRICHTUNG UND COMPUTERLESBARES MEDIUM
PROCÉDÉ DE RÉALISATION D'UNE PARTIE HORS LIGNE, DISPOSITIF, ET SUPPORT LISIBLE PAR ORDINATEUR

(30) Priority: 18.10.2013 KR 20130124436
(43) Date of publication of application: 15.06.2016
(73) Proprietor: Phoenixdarts Co., Ltd., Seoul (KR)
(72) Inventor: HONG, Sang Uk, Seoul 135-100 (KR)
(74) Representative: Metroconsult Srl
(86) International application number: PCT/KR2014/008256
(87) International publication number: WO 2015/056881

(56) References cited:
- EP-A1- 2 503 804
- EP-A2- 2 472 466
- DE-U1- 29 901 577
- JP-A- 2010 187 908
- KR-A- 20070 062 658
- KR-A- 20110 021 069
- KR-A- 20110 125 459
- US-A- 4 824 121
- US-A- 5 114 155

## Description

### [Technical Field]

The present invention relates to a dart game device and a dart game match making device, and more particularly, to a device for providing offline match making.

### [Background Art]

In general, a dart refers to a 'small arrow' and is a game that makes marks by throwing an arrow-shaped dart pin to a centrifugal target marked with figures. The dart game has an advantage in that anybody can enjoy the dart game anytime and anywhere if there are only an arrowheaded dart and the dart target. In recent years, as various game methods have been developed and a scoring method has been organized, the dart game has been developed as worldwide leisure, therefore, all adults and children have conveniently enjoyed the dart game.

In general, participants of the dart game need to participate in the game at the same time and in the same space in order to enjoy the dart game. However, with development of communication technology, have been developed electronic dart game devices in which each of the participants of the dart game may remotely participate in the dart game so as to participate in the game over temporal and spatial constraints and remotely transmit a play result or a play process thereof through a communication network. The electronic dart game devices may electrically sense a hitting point of the dart target and automatically aggregate scores and provide the aggregated scores to a player.

However, when a plurality of dart game devices is installed in a specific space, it may be more preferable to directly play the game with a player in the same place offline than to play the game with a player positioned remotely online in terms of entertainment of the player. Therefore, when the plurality of dart game devices is preset in the specific space, a method and a device for match-making players in the same space are required so as for the players in the same space to play the electronic dart game together not online but offline.
Document US 5 114 155 A discloses a distributed system to organize tournaments for darts.
Document US 4 824 121 A discloses a dart game with programmable displays.

### [Disclosure]

### [Technical Problem]

The present invention is contrived to correspond to the aforementioned background art and has been made in an effort to provide offline match making in an electronic dart game device including a communication function with an external device.

### [Technical Solution]

In order to realize the aforementioned object, the present invention, defined by the appended claims, provides match making methods according to claims 1 and 13, an electronic dart game device according to claim 11, computer-readable media according to claims 12 and 15, and a match making device according to claim 14. The dependent claims define preferred embodiments.

### [Advantageous Effects]

Since it is slightly inconvenient due to resistance to rejection that players directly make conversation to propose to play a dart game together offline, there is a high possibility that the players will perform the game with another player separated therefrom online even though another player is present just next thereto. Further, although it is assumed that the players decide to play the game together through direct conversation offline in spite of the inconvenience, the players cannot but stand by until a game which is played previously ends and a dart game device to be played together needs to be determined through consultation, and as a result, additional inconvenience cannot but be present. Moreover, since a difference in skill between the players cannot be known in advance, there is a limit in increasing a fun of the game if players having a similar skill play the game together even though the players play the game together offline.

Therefore, the player can more easily enjoy the dart game with other player(s) therearound offline through a server or a match making device according to an embodiment of the present invention. That is, when a plurality of dart game devices is installed in a specific space, directly playing the game with a player in the same place offline can more increase an interest and a fun of the game of the player than playing the game with a player positioned remotely online. Therefore, through a method and a device according to embodiments of the present invention, performing the play online or performing the play offline can be guided to be selected according to preference of the player to increase satisfaction for the game of the player and the need for match-making players in the same space can be resolved so that the players in the same space play an electronic dart game together not online but offline when the plurality of dart game devices is present in the specific space.

### [Description of Drawings]

FIG. 1 is a block diagram of a dart game device according to an embodiment of the present invention.
FIG. 2 is a conceptual diagram of a game network including a plurality of electronic dart game devices, a dart game match making device, and a server according to an embodiment of the present invention.
FIG. 3 is a perspective view of a dart game device according to an embodiment of the present invention.
FIG. 4 is a block diagram of a match making device according to an embodiment of the present invention.
FIG. 5 is a flowchart of a method for providing offline match making according to an embodiment of the present invention.

### [Best Mode]

Various embodiments will now be described with reference to the drawings and similar reference numerals are used to represent similar elements throughout the drawings. In the specification, various descriptions are presented to provide appreciation of the present invention. However, it is apparent that the embodiments can be executed without the specific description. In other examples, known structures and apparatuses are presented in a block diagram form in order to facilitate description of the embodiments.

"Component", "module", "system", and the like which are terms used in the specification designate a computer-related entity, hardware, firmware, software, and a combination of the software and the hardware, or execution of the software. For example, the component may be a processing process executed on a processor, the processor, an object, an execution thread, a program, and/or a computer, but is not limited thereto. For example, both an application executed in a computing device and the computing device may be the components. One or more components may reside in the processor and/or execution thread and one component may be localized in one computer or distributed among two or more computers. Further, the components may be executed by various computer-readable media having various data structures, which are stored therein. The components may perform communication through local and/or remote processing according to a signal (for example, data through other system and a network such as the Internet through data and/or a signal from one component that interacts with other components in a local system and a distribution system) having one or more data packets, for example.

The description of the presented embodiments is provided so that those skilled in the art of the present invention use or implement the present invention. Various modifications of the embodiments will be apparent to those skilled in the art and general principles defined herein can be applied to other embodiments without departing from the scope of the present invention, as defined by the appended claims.

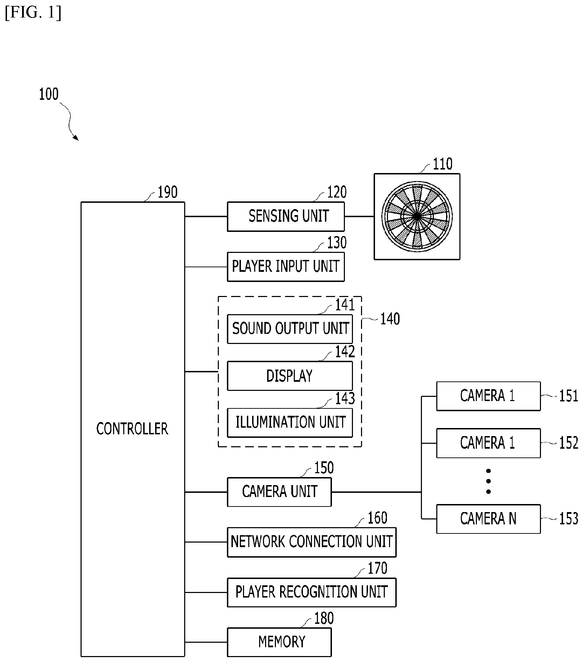

FIG. 1 is a block diagram of a dart game device according to an embodiment of the present invention.

The dart game device 100 may include a dart target 110, a sensing unit 120, a player input unit 130, an output unit 140, a camera unit 150, a network connection unit 160, a player recognition unit 170, a memory 180, a controller 190, and the like. The components illustrated in FIG. 1 are not essential components. Therefore, a dart game device having more components therethan or less components therethan may be implemented. Hereinafter, the components will be described in sequence.

The dart target 110 may include a score board in which a bullseye is positioned at the center and there are areas segmented by a concentric circle centering the bullseye and straight lines extended radially from the bullseye and granted with individual scores, respectively. Multiple holes into which a tip of a dart may be inserted may be deployed on the score board.

The dart target 110 includes a display 142 as described below to variably change score deployment of the dart target 110 and shapes of areas granted with the scores. In this case, the dart target 110 includes a light transmissive touch pad in the display 142 to be stacked to have a form of a touch screen.

The sensing unit 120 senses a play of a dart game player performed with respect to the dart target 110. The sensing unit 120 may actually evaluate the play of the game player. The sensing unit 120 may sense an area of the dart target 110 which the thrown dart hits, with respect to a play in which the game player throws the dart. The sensing unit 120 electrically converts a score corresponding to the area which the dart hits to transmit the converted score to the controller 190.

The player input unit 130 receives an input of a player for controlling the dart game device 100. The player input unit 130 may include a keypad, a dome switch, a touch pad (resistive/capacitive), a jog wheel, a jog switch, and the like. The player input unit 130 may also include cameras 151 to 153, a microphone, or the like. Additionally, the player input unit 130 may also include a short range communication module (not illustrated) as described below. In the embodiment of the present invention, the player input unit 130 may be configured to include the short range communication module (not illustrated) of the network connection unit 160. When the player input unit 130 includes the short range communication module of the network connection unit 160, the player input unit 130 may be configured to receive a user's input which is input by an external console device. As short range communication technology, Bluetooth, radio frequency identification (RFID), infrared data association (IrDA), ultra wideband (UWB), ZigBee, or the like may be used. For example, when the player input unit 130 performs the short range communication using the IrDA, the external console device may be an infrared remote controller. Alternatively, when the player input unit 130 performs the short range communication using a Bluetooth function, the external console device may be a mobile device including a Bluetooth module. The mobile device including the Bluetooth module may be, for example, a smart phone including the Bluetooth module.

The player may select a dart game mode, a match making request, a match approval, the number of dart game players, a dart game play mode, and the like through the player input unit 130. For example, the player may select the number of dart game players, the dart game play mode (a zero one game, a cricket game, a count-up game, and the like), the dart game mode (a single play, a network play, and the like), the offline match making request, and the match approval through the player input unit 130.

The player input unit 130 receives a signal by sensing a key operation or a touch input of the player or receives voice or a motion through the cameras 151 to 153 or the microphone of the player to convert the received signal, voice, or motion into an input signal. To this end, known speech recognition or motion recognition technologies may be used.

The output unit 140 which is used for generating an output related with sight, hearing, or touch may include a sound output unit 141, a display 142, an illumination unit 143, and the like.

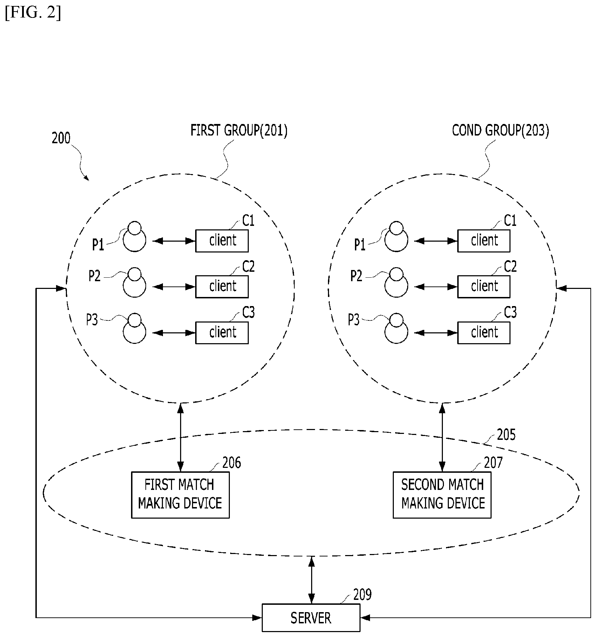

The sound output module 141 may output audio data received from the network connection unit 160 or stored in the memory 180 in a sound effect of the game, a game motion guide, a game method description, and the like. The sound output module 141 may also output a sound signal related with a function (e.g., a game effect sound) performed by the dart game device 100. The sound output module 141 may also output a voice from a game player or a third person using another dart game device 200 (see FIG. 2) received through the network connection unit 160. The sound output module 141 may include a receiver, a speaker, a buzzer, and the like. Additionally, as described below, an output of a match making stand-by player list when the dart game device 100 receives an offline match making request, an output of an inquiry indicating whether to directly select an offline match opposing player, an output of an inquiry indicating whether to input a match approval of an opposing player and/or a current player, and/or an output of the dart game device designated to perform the play may be output as audio information by the sound output module 141.

The display 142 displays (outputs) information processed in the dart game device 100. For example, when the dart game device 100 is in a game play mode guidance mode, the display 142 may output a selectable game play mode. Additionally, when the dart game device 100 receives the offline match making request, the display 142 may output the match making stand-by player list. Furthermore, the display 142 may output a screen for inquiring whether to directly select the offline match opposing player and output a screen for inquiring whether to input the match approval of the opposing player and/or the current player. Moreover, the display 142 may output the dart game device designated to perform the play based on a specific algorithm. Further, when the dart game device 100 is playing the game, the display 142 may display the score sensed through the sensing unit 120 or output an image acquired by photographing the game player or the third person using another dart game device received through the network connection unit 160.

The display 142 may include at least one of a liquid crystal display (LCD), a thin film transistor-liquid crystal display (TFT LCD), an organic light-emitting diode (OLED), a flexible display, and a 3D display. Some of the displays may be configured as a transparent or light transmissive type to view the outside through the displays. This may be called a transparent display and a representative example of the transparent display includes a transparent OLED (TOLED), and the like.

In the embodiment of the present invention, two or more displays 142 may be present according to an implementation form of the dart game device 100. For example, in the dart game device 100, multiple displays may be deployed on one surface to be separated or integrally and further, deployed on different surfaces, respectively. For example, the display 142 may include both a display disposed at an upper end of the target 110 and a display disposed at a lower end of the target 110, or may include one display thereof. However, a location where the aforementioned displays are disposed is just an example, and the displays may be disposed at various positions for a demand due to a design or a visual effect.

A touch sensor may be configured to convert pressure applied to a specific portion of the display 142 or a change in capacitance generated at the specific portion of the display 142 into an electrical input signal. The touch sensor may be configured to detect touch pressure as well as touched location and area. When there is a touch input for the touch sensor, a signal(s) corresponding to the touch input are sent to a touch controller. The touch controller processes the signal(s) and thereafter, transmits data corresponding thereto to the controller 190. As a result, the controller 190 may recognize which area of the display 142 is touched.

The illumination unit 143 outputs a signal for notifying occurrence of an event of the dart game device 100. Examples of the event which occurs from the dart game device 100 include identification of the dart game player, direct hit of the dart, a change of the dart game player, game over, and the like. The illumination unit 143 may include a light emission diode (LED) and notify the occurrence of the event to the user through flickering of the LED. The LEDs are disposed on the bottom of the dart target 110 to be flickered according to a flickering pattern which is pre-stored according to the occurrence of the event. For example, one or more LEDs may be allocated to respective parts of the dart target 110. The allocated LEDs are disposed on the bottom of the dart target 110 and may be disposed in a direction orienting the outside of the dart game device 100. When the LEDs irradiate light, the light irradiated by the LEDs may pass through the dart target 110 made of a transparent or translucent material to transfer a visual output to the user. Alternatively, the light irradiated by the LEDs may transfer the visual output to the user through a gap existing in the dart target 110.

The output unit 140 may also output another form other than a video signal or an audio signal, for example, a signal for notifying the occurrence of the event by vibration.

The camera unit 150 includes multiple cameras 151 to 153, and as a result, an image frame processed by the cameras 151 to 1153 may be stored in the memory 180 or transmitted to the outside through the network connection unit 160. Two or cameras 150 may be provided according to a use environment. At least some cameras of the camera unit 150 may be disposed to photograph an image frame including the dart target 110 and other cameras may be disposed to photograph an image frame directly related with a game rule in the dart game play. For example, the camera may be disposed to photograph a throw-line on which the dart is thrown in order to photograph the image frame directly related with the dart game rule. The multiple cameras 151 to 153 included in the camera unit 150 may be disposed to photograph at least some image frames to overlap with each other. In the embodiment of the present invention when the camera unit 150 includes one camera, the camera may be a panorama camera disposed to photograph both at least a part of the dart target 110 and the image frame (e.g., the throw-line in the dart game) directly related with the game rule.

The network connection unit 160 may include one or more modules that enable wireless communication between the dart game apparatus 100 and a wired/wireless communication system or between the dart game device 100 and a network on which the dart game device 100 is positioned. In the embodiment of the present invention, the network connection unit 160 may include a transmitting unit and a receiving unit. The network connection unit 160 may include a wired/wireless Internet module for accessing the network. As the wireless Internet technology, wireless LAN (WLAN) (Wi-Fi), wireless broadband (Wibro), world interoperability for microwave access (Wimax), high speed downlink packet access (HSDPA), or the like, may be used. As wired Internet technology, digital subscriber line (XDSL), fibers to the home (FTTH), power line communication (PLC), or the like may be used.

Further, the network connection unit 160 includes a short-range communication module to transmit and receive data to and from an electronic apparatus positioned in a comparatively short range from the dart game device 100 and including the short-distance communication module. As short range communication technology, Bluetooth, radio frequency identification (RFID), infrared data association (IrDA), ultra wideband (UWB), ZigBee, or the like may be used. In the embodiment of the present invention, the network connection unit 160 may sense a connection state of the network and a transceiving speed of the network. Data received through the network connection unit 160 may be output through the output unit 140, stored through the memory 180, or transmitted to other electronic apparatuses positioned in a short range through the short-range communication module.

Additionally, an output of a match making stand-by player list when the dart game device 100 receives an offline match making request, an output of an inquiry indicating whether to directly select an offline match opposing player, an output of an inquiry indicating whether to input a match approval of an opposing player and/or a current player, and an output of the dart game device designated to be played may be transmitted to a mobile or a PC of the player by the network connection unit 160based on identification information of the player, and the like .

The player recognition unit 170 may recognize unique information of a long-range player by using a radio wave through the radio frequency identification (RFID) technology which is a kind of short range communication technology. For example, the user may possess a card, a mobile terminal, or unique dart game equipment, for example, his/her own personal dart equipment, which includes an RFID module. Information (e.g., a personal ID, an identification code, and the like of the user registered in the database server (DB) (see FIG. 2) for identifying the user may be recorded in the RFID module possessed by the player. The dart game device 100 may identify the RFID module possessed by the user to identify a dart game player which plays the game by using the dart game device 100 and update a database for the identified dart game player or accumulate new data. In the embodiment of the present invention, the player recognition unit 170 may be integrated into the player input unit 130.

The player recognition unit 170 may include various technologies (e.g., the short-range communication technology such as the Bluetooth, and the like) that may transmit and receive unique information of the user by a contact/non-contact method in addition to the RFID technology. Further, the player recognition unit 170 may include a biodata identification module that identifies biodata (a voice, a fingerprint, and a face) of the player by interworking with the microphone of the user input unit 130, the touch pad, the camera unit 150, and the like.

The memory 180 may store a program for an operation of the controller 190 therein and temporarily store input/output data (e.g., a phone book, a message, a still image, a moving picture, or the like) therein. The memory 180 may store data regarding various pattern vibrations and sounds output in the touch input on the touch screen. The memory 180 may include at least one storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The dart game device 100 may operate in connection with a web storage performing a storing function of the memory 180 on the Internet.

The controller 190 generally controls all operations of the dart game apparatus 100. For example, in the case of the dart game, the score sensed through the sensing unit 120 is collected for each game participant, the collected score is transmitted to and received from another dart game device 200 connected through the network, and a game winning/losing record, the score, and the like according to the collected result are recorded. The controller 190 may perform pattern recognition processing to recognize a motion input, a writing input, and the like performed in the touch screen or the camera as a letter or an image. Further, the controller may perform speech recognition by using a speech-to-text (STT) function to recognize the speech input through the microphone as the letter. As illustrated in FIG. 1, since the controller 190 may communicate with all of the other components, the controller 190 may organically control operations of the components.

Various embodiments described herein may be implemented in a computer-readable recording medium or a recording medium readable by a device similar to the computer by using, for example, software, hardware, or a combination thereof. According to hardware implementation, the embodiment described herein may be implemented by using at least one of ASICs (application specific integrated circuits), DSPs (digital signal processors), DSPDs (digital signal processing devices), PLDs (programmable logic devices), FPGAs (field programmable gate arrays), processors, controllers, micro-controllers, microprocessors, and electric units for performing other functions. In some cases, the embodiments described in the specification may be implemented by the controller 190 itself. According to software implementation, embodiments such as a procedure and a function described in the specification may be implemented by separate software modules. Each of the software modules may perform one or more functions and operations described in the specification. A software code may be implemented by a software application written by an appropriate program language. The software code may be stored in the memory 180 and executed by the controller 190.

FIG. 2 is a conceptual diagram of a game network 200 including a plurality of electronic dart game devices, a dart game match making device, and a server according to an embodiment of the present invention. As illustrated in FIG. 2, dart game devices C1, C2, and C3 used by first, second, and third players P1, P2, and P3 in a specific space, respectively may be grouped into a first group and dart game devices C4, C5, and C6 used by fourth, fifth, and sixth players P4, P5, and P6 in another specific space, respectively may be grouped into a second group. That is, since the respective dart game devices C1 to C6 have unique identification information and positional information, the respective dart game devices C1 to C6 may be managed by a server 209 for each identification number and/or positional information. In the embodiment of the present invention, the server 209 may group the dart game devices C1 to C6 based on the positional information and/or identification information of the respective dart game devices C1 to C6. Further, although not illustrated in FIG. 2, the server 209 may include a media server (MS), a relay server (RS), a dart game server (GS), and a database server (DB). In the embodiment of the present invention, the respective dart game devices designated by reference numerals C1 to C6 may correspond to the dart game device 100 illustrated in FIG. 1.

As illustrated in FIG. 2, match making devices 206 and 207 may communicate with a first group 201 and a second group 202, respectively through the network 200 and communicate even with the server 209. In an additional embodiment of the present invention, a group 205 of the match making devices may be optional and the server 209 may substitute for a function thereof. In another embodiment of the present invention, the group 205 of the match making devices may substitute for functions of the server 209 to be described below.

In the embodiment of the present invention, multiple dart game players may enjoy the dart game in the same space at the same time by using the same first dart game device C1. However, exemplarily, when a fourth dart game player P4 positioned at a remote range from the first dart game player P1 intends to participate in the dart game, the fourth dart game player P4 is connected with one or more servers 209 (the media server MS, the relay server RS, and the dart game server GS) through the network 200 by using the fourth dart game device C4 to transmit and receive information to and from the first dart game device C1, thereby performing the dart game. In the embodiment of the present invention different dart game devices may transmit or receive information via one or more servers 209 (the media server MS, the relay server RS, and the dart game server GS) or the different dart game devices may directly transmit and receive the information thereamong. In an additional embodiment of the present invention, the dart game may be performed by differentiating places at which both dart game players P1 and P2 play the dart game at the same time or performed by a method in which both dart game players P1 and P2 play the dart game at different places at different time and winning/losing or a ranking is determined by storing play contents in the server 209 (database server).

The media server MS may store dart game play moving pictures of the dart game players P1 to P6, which are stored by using the camera or the microphone stored in the dart game devices C1 to C6. Additionally, the media server MS may be included in the DB server DB.

The relay server RS may perform communication among the multiple dart game devices C1 to C6 or connect the multiple dart game devices C1 to C6 and the match making device 206 and 207. The relay server RS forms a communication network among the multiple dart game devices positioned at the remote range to form a peer-to-peer (P2P) network.

The game server GS may exchange information (a score acquired by each game player and information for mutual communication among the respective game players) among the dart game devices C1 to C6, transmit an advantage or a warning based on a game rule through the respective dart game devices C1 to C6, or perform other transmission and reception of information required to perform the dart game and controlling the dart game devices C1 to C6. The dart game server GS aggregates winning/losing of the dart game and scores of the respective dart game players P1 to P6 to transmit the aggregated winning/losing and scores to the DB server.

The DB server may store personal information of the respective dart game players P1 to P6, winning/losing and ranking information of the game, score information for each game, or a replay moving picture for each game. The DB server may store the information segmented for each player. The DB server may grant a unique code to each player and manage information for each player by using the unique code. The unique code may be stored in the RFID module (an RFID card or an RFID module stored in the mobile terminal) possessed by each player. As a result, the dart game devices C 1 to C6 may identify each game player through the included player recognition unit 170 or player input unit 130. As described above, the DB server may also grant the unique code for identification even to the respective dart game devices C 1 to C6 and manage the dart game data for each identification code granted to the dart game devices 100 and 200 or for each geographical area (positional information).

Although not illustrated in FIG. 2, the game player may access a web server WS by using a mobile device (including electronic apparatuses such as a mobile terminal, a cellular phone, a PDA, a PDP, and the like, which have a mobile communication function) or a PC. The web server WS may be connected with the mobile device by the Internet or Intranet. Further, the web server WS may be connected even with the dart game devices C1 to C6. The web server WS is connected with the DB server DB to provide the dart game data stored in the DB server to the dart game player.

In the embodiment of the present invention, at least one of the server 209 (e.g., game server GS), the match making devices 206 and 207, and the dart game devices C1 to C6 may perform the match making algorithm and the match making algorithm may select an opposing player among players associated with at least one other electronic dart game device grouped with the electronic dart game device based on the positional information. In the embodiment of the present invention, the match making algorithm may be performed at least partially based on at least one of identification information, rating information, class information, point per dart (PPD) information, and mark per round (MPR) information of the current player and the opposing player as described below. Furthermore, the match making algorithm may select the opposing player for offline matching and designate a specific dart game device for playing the game together with the selected opposing player offline. The match making algorithm may designate one of a dart game device associated with the player, a dart game device associated with the opposing player, and a third idle dart game device partially based on the identification information of the player and the opposing player and the positional information of the electronic dart game device.

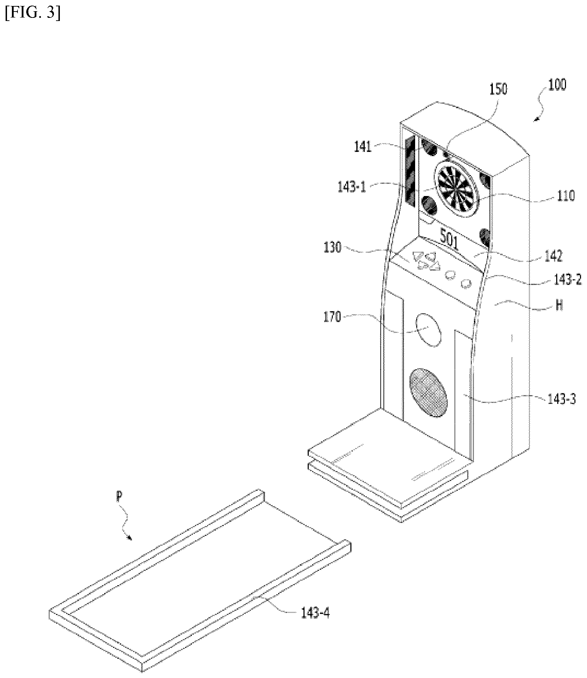

FIG. 3 is a perspective view of a dart game device according to an embodiment of the present invention.

As illustrated in FIG. 3, the dart game device 100 according to the embodiment of the present invention may be formed by mounting the components illustrated in FIG. 1 in a housing H. A dart target 110, a display 142, an illumination unit 143, a sound output unit 141, a camera unit 150, and a user recognition unit 160 may be disposed on the front surface of the dart game device 100.

The dart target 110 may be disposed so that a dead centre is positioned at a position (for example, 5 feet 8 inches in a vertical direction of the ground) suitable for a rule of the dart game. The illumination units 143-1, 143-2, and 143-3 may be disposed at various parts of the dart game device 100 to transfer various and variable visual effects to the player of the dart game device 100. For example, the illumination unit 143-1 is disposed at the side of the dart target 110 and may serve to irradiate an illumination to the dart target 110. The illumination unit 143-1 may also output a predetermined illumination effect according to an event of the dart game. Further, the illumination unit 143-1 may output illumination effects having various colors.

The illumination unit 143-2 may be formed to be extended in a vertical direction along a forward projection of the housing H. Like the illumination unit 143-1, the illumination unit 143-2 may output a predetermined illumination effect according to an event of the dart game and output illumination effects having various colors.

The illumination unit 143-3 may be disposed on the side of the user recognition unit 170. The illumination unit 143-3 may output a predetermined illumination effect according to an event of the dart game and output illumination effects having various colors. Particularly, the illumination unit 143-3 may output an illumination effect for an event related with the user recognition unit 170.

Selectively, the dart game device 100 may include a dart plate P which may be selectively connected with the dart game device 100 and extended in a horizontal direction. The dart plate P may further include an illumination unit 143-4. The dart plate P may be integrally coupled with or selectively attached to or detached from the dart game device 100.

When the dart plate P is integrally coupled with or selectively attached to the dart game device 100, the dart plate P may be electrically connected with the dart game device 100. The illumination unit 143-4 of the dart game device 100 may be disposed along the outside of the dart plate P as illustrated in FIG. 3. One end of the dart plate P may be extended to a place where a throw-line is to be positioned along a distance of the throw-line from the dart target according to a rule of the game. The illumination unit 143-4 may be disposed at a position corresponding to the throw-line.

Although not illustrated in FIG. 3, an illumination unit (not illustrated) is disposed at the bottom of the dart target 110 to irradiate an illumination effect in a user direction. The illumination unit (not illustrated) may include a combination of different illumination elements allocated according to each segment configuring the dart target.

The housing H of the dart game device 100 may include the display 142 disposed in the user direction. The display 142 may display information required for the user according to the progress of the dart game (for example, a collected score, information on a player during playing, a score required for clearing the corresponding game, information of an opposing player which is not playing the game, and the like). The display 142 may display a visual effect according to an event depending on the progress of the dart game. For example, when the user continuously hits a bullseye at the dead center of the dart target 100 at three dart throw chances, the display 142 may display a pre-stored motion picture corresponding to the corresponding event. The motion picture may be stored in the memory 180 of the dart game apparatus 100 or received from a server through the network connection unit 160.

The display 142 may provide the user with visual and audible effects according to occurrence of the event by interlocking with the illumination units 143-1, 143-2, 143-3, and 143-4 and the sound output unit 140. In other words, when a predetermined event occurs, the display 142, the illumination units 143-1, 143-2, 143-3, and 143-4, and the sound output unit 140 may output an illumination effect, a display effect, and a sound effect with respect to the corresponding event.

In FIG. 3, it is illustrated that the display 142 is disposed at the lower end of the dart target 110, but the numbers and disposed positions of display 142 may be variously modified.

The user input unit 130 may be configured in a key pad button form as illustrated in FIG. 3. However, as described above, the user input unit 130 may be configured by various types including a touch screen. The user operates a key button of the user input unit 130 to select a mode of a game to be played by the user, an offline matching request and match approval and the like.

The sound output unit 141 is disposed on the front surface of the housing H of the dart game device 100 to output a sound. The number and disposed positions of sound output units 141 may also be variously modified.

The camera unit 150 may be mounted on the top of the housing H of the dart game device 100 as illustrated in FIG. 3. The camera unit 150 may include one or more cameras 151, 152, ..., 153 which may photograph the dart target 110 and the throw line. The image photographed through the camera unit 150 may be transferred to the memory 180. According to the embodiment of the present invention, only some of the motion pictures photographed by the camera unit 150 may be finally stored in the memory 180 or transferred to a server through the network communication unit 160.

The user recognition unit 170 may be disposed on the front surface of the housing H of the dart game apparatus 100 and include a short range communication module as illustrated in FIG. 3. The user touches a card for recognizing the user near the user recognition unit 170 to complete user authentication.

The contents illustrated in FIG. 3 and the description of the exterior of the aforementioned dart game device 100 are just an example proposed for description, and the dart game device 100 according to the present invention is not limited to the exterior illustrated in FIG. 3.

Hereinafter, a representative rule of the dart game and stats of the player associated therewith will be described.

The dart game which may be executed by the dart game device 100 according to the embodiment of the present invention may include a 01 game (zero-one game), a cricket game, a count-up game, a match-up mode, and the like.

The 01 game is performed by two teams (alternatively, two players) throwing the dart to the dart target alternately one by one round. One round includes three dart throwing operations. An object of the game is that sum-up of scores in each round reaches a target score (a score of the unit of 100 or 1000 that generally ends with 01, such as 301, 501, 701, 901, 1101, 1501 points, and the like). The target score and a play round may be arbitrarily adjusted according to the number of players that participate in the round.

In the cricket game, the round is performed by throwing three darts in a first round similarly to the 01 game. The standard cricket game may be performed by using only a bull region at the center of the dart target, and 20, 19, 18, 17, 16, and 15 point regions. When the corresponding cricket figures are hit with 3 marks, this is marked as a position of the player and when the corresponding cricket figures are hit with 4 marks or more, scores corresponding to the figures are added up to compete the scores. Herein, double regions and triple regions of the dart target may be calculated with 2 marks and 3 marks, respectively. While the corresponding cricket figure is marked as the position of the player, when a counterpart of the player also marks 3 cricket figures, the corresponding cricket figure is regarded to be closed and no score may be added up longer. The object of the game may be set to acquire a high score until a regulation round ends or close all cricket figures and a higher score than the counterpart.

The count-up game is a game at which the player wins when acquiring a high score within a predetermined round.

In addition to the aforementioned games, various types of games may be played by the dart game device 100 and the play mode of the dart game device 100 is not limited to the aforementioned game schemes.

The stats of the player may be defined according to the corresponding game rule independently from the winning or losing of the count-up game, the cricket game, and the 01 game.

For example, points per dart (PPD) may be calculated by dividing a total score which the player earns by the number of dart throwing times in the 01 game. Alternatively, marks per round (MPR) may be calculated by calculating the number of marking times of the player in one round. For example, in the cricket game, when the player performs three dart throwing operations in one round and the darts hit 15 triple, 19 single, and 20 double in the three dart throwing operations, respectively, the MPR becomes (3 + 1 + 2)/1 = 6.00 (MPR). In a subsequent round, when the player performs three dart throwing operations and the darts hit mark fail, 18 double, and 20 single in the three dart throwing operations, the MPR becomes (3 + 1 + 2 + 0 + 2+ 1)/2 =4.5 (MPR).

The PPD and the MPR as the stats of the player may also be stored as personal data or identification data of the player. Alternatively, in the count-up game, an average score of the player per game, a highest score record of the player per game, and the like may be stored as the stats of the player.

The dart game apparatus 100 may play the dart game according to the corresponding mode and transmit a game record per player to a game server GS or a DB server DB. The game server GS or DB server DB may calculate the PPD and/or MPR for each player according to the corresponding game record and store the calculated PPD and/or MPR as accumulated PPD and/or MPR stats of the player. Further, the game server GS or the DB server DB may individually store the game record of the player. For example, in the 01 game, the count-up game, or the cricket game which the player played in the past, the game server GS or the DB server DB may record information on a segment part of a dart which the player hits each dart throwing. The game server GS or DB server DB may store accumulated (average) PPD and/or MPR data and highest PPD and/or MPR data of the player.

The game server GS or the DB server DB may be two physically separated servers. Alternatively, the game server GS or the DB server DB may be one physically integrated server and be distinguished according to roles performed in the server. Further, as described above, one server may serve as both the game server GS and the DB server DB.

The game server GS or the DB server DB may store personal stats of the player and rating (alternatively, grade (class)) may be granted to the player according to the corresponding stats. The rating and/or grade (class) which may be granted to the player according to the PPD and/or MPR may be stored as personal data or personal identification information.

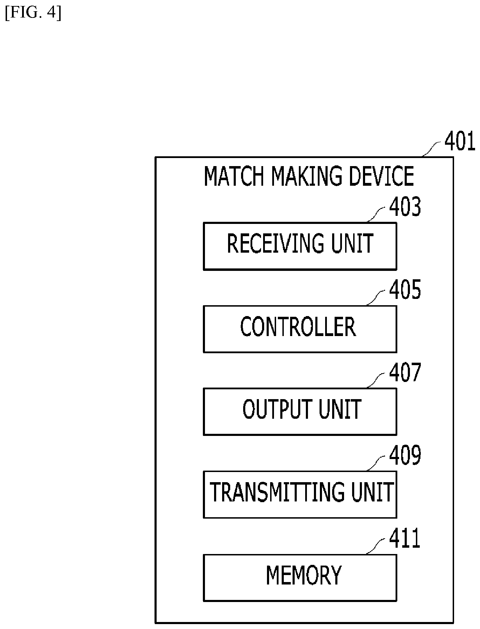

FIG. 4 is a block diagram of a match making device according to an embodiment of the present invention. As illustrated in FIG. 4, the match making device 401 may include a receiving unit 403, a controller 405, an output unit 407, a transmitting unit 409 and a memory 411. The match making device 401 may manage a group of one or more dart game devices and communicate with a dart game device and/or a server through the transmitting unit 409 and the receiving unit 403.

When an offline matching request from a player is directly input into the match making device 401 or the offline matching request is received from the dart game device of the player, the controller 405 of the match making device 401 adds identification information of a player who request match making to a match making stand-by player list to create an updated match making stand-by player list. Further, the match making device 401 may store the identification information of players and the match making stand-by player list in the memory 411. The match making device 401 may output the updated match making stand-by player list directly by the output unit 407 or transmit the updated match making stand-by player list to a dart game device associated with the player that requests the match making by the transmitting unit 409. When the player that requests the match making does not directly select an opposing player in the stand-by player list, the controller 405 of the match making device 401 may select the opposing player in the stand-by player list and output information associated with the selected opposing player through the output unit 407, through a match making algorithm. In an additional embodiment of the present invention, the information associated with the selected opposing player may be transmitted to the dart game device associated with the player that requests the match making or the dart game device associated with the opposing player by the transmitting unit 409 of the match making device 401. In the embodiment of the present invention, the match making algorithm may select the opposing player among players associated with one or more other grouped electronic dart game devices based on the electronic dart game device of the player that requests the match making and positional information. In the embodiment of the present invention, the match making algorithm may be performed at least partially based on at least one of the identification information, the rating information, the class information, the point per dart (PPD) information, and the mark per round (MPR) information of the current player and the opposing player as described above. Furthermore, the match making algorithm may also select the opposing player for offline matching and designate a specific dart game device for playing the game together with the selected opposing player offline. In an additional embodiment of the present invention, when an approval input for a match is directly received into the receiving unit 403 from players or received from dart game devices associated with the respective players, the match making algorithm may designate a dart game device which approved players will play together. In the embodiment of the present invention, the match making algorithm may designate one of a dart game device associated with the player, a dart game device associated with the opposing player, and a third idle dart game device partially based on the identification information of the player and the opposing player and the positional information of the electronic dart game device. As an example, the match making algorithm selects players having the most similar skill based on information of the players included in the stand-by list to perform the match making and may designate performing the play together in a dart game device associated with a player having the most excellent skill among the selected players. In an additional embodiment of the present invention, when an input to select an opposing player with which the current player will perform the play is received by the receiving unit 403, the match making algorithm may perform only designation of the dart game device in which the current player performs the play together with the opposing player. Furthermore, selecting the device to play together may also be guided so that the players directly select the devices by the output unit 407 and in this case, as an example a dart game device associated with a player first input into the receiving unit 403 may be set to be selected or a dart game device selected by the player which is first input may be set to be selected.

When the approval input for the match and an approval input for the designated dart game device (as necessary) is directly received into the receiving unit 403 from the players or received from dart game devices associated with the respective players, the transmitting unit 409 may perform signaling so as to drive the designated electronic dart game device. When the approval input from the players is not received for a predetermined threshold time, the controller 405 may reset or cancel the match making and return to an idle state.

In an additional embodiment of the present invention, the operations of the match making device may be performed by the server.

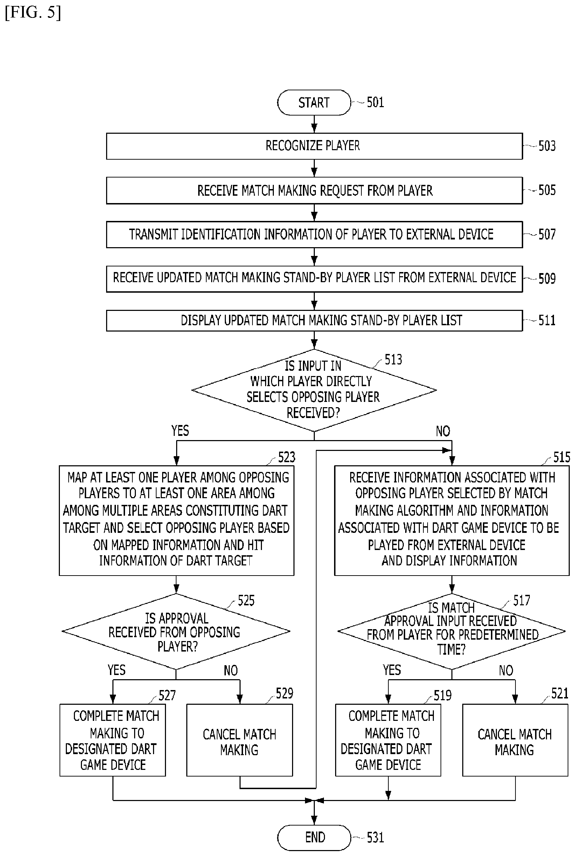

FIG. 5 is a flowchart of a method for providing offline match making according to an embodiment of the present invention. In the embodiment of the present invention, the method may be performed by a dart game device.

The method may start in 501 and as shown in step 503, when an input from a player is received into a player recognition unit or a player input unit, the dart game device may recognize identification information of the player. Then, when an offline match making request from the player is input (505), a match making request including identification information of the player, and the like may be transmitted to an external device (507). Herein, the external device may include a server, a dart game device, or a match making device. The external device adds the requested player to a match making stand-by player list to create an updated match making stand-by player list. The dart game device may receive the updated match making stand-by player list from the external device (509) and output the updated match making stand-by player list (511). Selectively, the dart game device may request a current player to directly select an opposing player in the match making stand-by player list (513). When the current player does not directly select the opposing player or does not request the direct selection of the player, the dart game device may receive information associated with the opposing player selected by a match making algorithm and information associated with an electronic dart game device to be played from the external device and output the information (515). Herein, the external device may transmit the information associated with the electronic dart game device to be played and information on a player which will perform a play together even to a dart game device associated with the opposing player. Then, when a match approval from players is input for a predetermined time, the process proceeds to step 519 and a current player may be finished or a stand-by time may be output for performing the play together with electronic dart game device(s) associated with the players which will perform the play together, in order to complete match making to a designated electronic dart game device. The match approval input may be an input into the dart game device associated with the respective players or an input into a dart game device designated to perform the play together. However, when the match approval from the players is not input for the predetermined time, the match making may be cancelled (521). The cancellation of the match making may be decided by the dart game device associated with the respective players or performed by receiving a cancellation command from a match making device or a server.

By returning to step 513, when an input indicating that the player directly selects the opposing player is received, at least one player among the opposing players may be mapped to at least one of multiple areas constituting a dart target and the opposing player may be selected based on mapped information and hit information of the dart target (523). In other words, the dart game device may guide the current player to throw a dart to the dart target and select an opposing player mapped with a hit location based on the hit information of the dart target by the player. In this case the dart game device of the current player may transmit a play request message to the dart game device associated with the opposing player and when an approval input from the opposing player is received (from the dart game device associated with the opposing player) (525), the match making may be completed while outputting information on the dart game device designated by the match making algorithm (527). When the approval input from the opposing player is not received (alternatively, when a rejection input is received), current match making may be automatically cancelled and the process may proceed to step 515 in order to automatically select the opposing player to be played. In this case, information associated with the opposing player selected by the match making algorithm and the dart game device to be played together may be received and output from the external device (515). Subsequent steps are described as above.

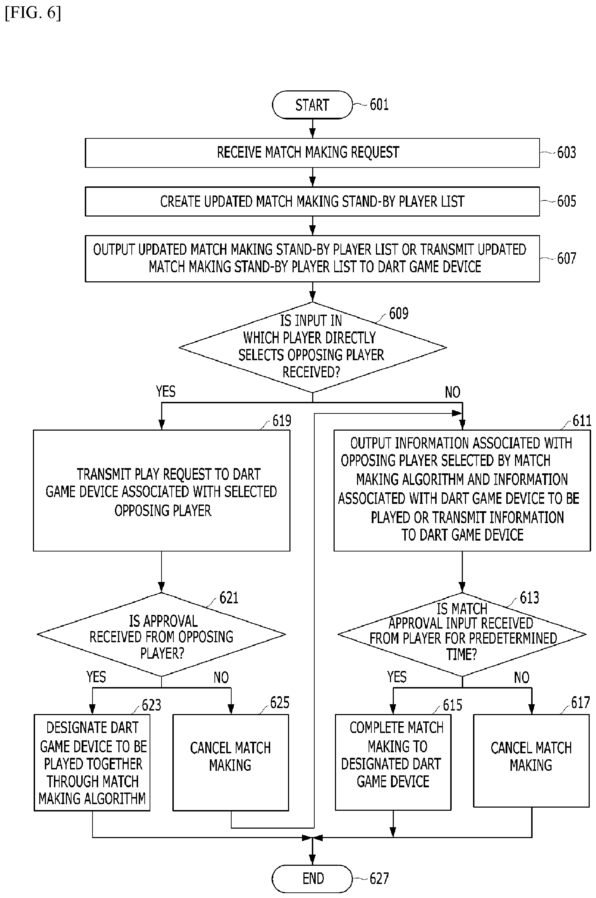

FIG. 6 is a flowchart of a method for providing offline match making according to an embodiment of the present invention. In the embodiment of the present invention, the method may be performed by an external device such as a match making device or a server. The match making device may manage a group of one or more dart game devices and communicate with a dart game device and/or a server through a transmitting unit and a receiving unit.

Now referring to FIG. 6, reference numeral 601 starts and when an offline matching request from a player is directly input into the match making device or the offline matching request is received from the dart game device of the player (603), a controller of the match making device adds identification information of a player who requests match making to a match making stand-by player list to create an updated match making stand-by player list (605). Then, the match making device may output the updated match making stand-by player list directly by an output unit or transmit the updated match making stand-by player list to a dart game device associated with the player that requests the match making by the transmitting unit (607). In the embodiment of the present invention, the updated match making stand-by player list is output, and as a result, the match making device may guide the player which request the match making to select an opposing player among players in the match making stand-by player list (609).

When the player which requests the match making does not select the opposing player in the stand-by player list for a specific time(alternatively when an input not to select the opposing player is received into the match making device), the controller of the match making device may select the opposing player in the stand-by player list and/or designate a dart game device to be played together and output the information or transmit the information to the dart game device, through a match making algorithm (611). In this case, when a match approval is directly input from players for a predetermined threshold time or received from the dart game device (613), the match making device may perform signaling to the designated electronic dart game device so as for the players to perform a play while completing match making to the designated electronic dart game device (615). If not (613), the match making device may cancel the match making (617). In an additional embodiment of the present invention, when the match making is cancelled, the match making device may select another player together through the match making algorithm.

When an input to directly select the opposing player in the stand-by player list is received from the player which requests the match making, the match making device may transmit a play request to a dart game device associated with the opposing player (619). Then, when the approval input from the opposing player is received (621), the dart game device to be played together is designated and output through the match making algorithm or information associated with the dart game device associated with the opposing player and the dart game device designated as the dart game device associated with the requested player may be transmitted (623). If not (621), the match making device may cancel the match making (625) and the process proceeds to step 611 to select the opposing player to perform the play and the dart game device to be played by automatically performing the match making algorithm. Subsequent steps are described as above.

In the embodiment of the present invention the match making algorithm may select the opposing player among players associated with one or more other grouped electronic dart game devices based on the electronic dart game device of the player that requests the match making and positional information. In the embodiment of the present invention, the match making algorithm may be performed at least partially based on at least one of the identification information, the rating information, the class information, the PPD information, and the MPR information of the current player which requests the match making and the opposing player. Furthermore, the match making algorithm may not only select the opposing player for offline matching but also designate a specific dart game device for playing the game together with the selected opposing player offline. In the embodiment of the present invention, the match making algorithm may designate one of a dart game device associated with the player which requests the match making, a dart game device associated with the opposing player, and a third idle dart game device partially based on the identification information of the player which requests the match making and the opposing player and the positional information of the electronic dart game device.

Meanwhile, various embodiments presented herein may be implemented as manufactured articles using a method, an apparatus, or a standard programming and/or engineering technique. The term "manufactured article" includes a computer program, a carrier, or a medium which is accessible by a predetermined computer-readable device. For example, a computer-readable medium includes a magnetic storage device (for example, a hard disk, a floppy disk, a magnetic strip, or the like), an optical disk (for example, a CD, a DVD, or the like), a smart card, and a flash memory device (for example, an EEPROM, a card, a stick, a key drive, or the like), but is not limited thereto. Further, various storage media presented herein include one or more devices and/or other machine-readable media for storing information. The term "machine-readable media" include a wireless channel and various other media that can store, posses, and/or transfer command(s) and/or data, but are not limited thereto.

The description of the presented embodiments is provided so that those skilled in the art of the present invention use or implement the present invention. Various modifications of the embodiments will be apparent to those skilled in the art and general principles defined herein can be applied to other embodiments without departing from the scope of the present invention, as defined by the appended claims.

### [Mode for Invention]

Contents associated with a best mode for carrying out the present invention have been described.

### [Industrial Applicability]

The present invention can be used in a digital device, a dart device, a dart game device, an entertainment device, a dart server, and the like.

## Claims

1. A match making method in an electronic dart game device (100) including a communication function with an external device, the method comprising:
receiving, by a player input unit (130), a match making request that was input by a player;
receiving, by a controller (190;405), information associated with an opposing player selected by a match making algorithm,
wherein
the controller (190;405) selects the opposing player which is in the same place among players associated with one or more other grouped electronic dart game devices based on electronic dart game device unique identification information and electronic dart game device positional information, and wherein the controller (190;405) selects the electronic dart game device for playing the game together with the selected opposing player at the same place based on the electronic dart game device unique identification information and the electronic dart game device positional information;
outputting, by an output unit (140), information associated with the electronic dart game device which the player and the opposing player are to play, and
signaling, by a network connection unit (160), to drive a selected electronic dart game device which the player and the opposing player are to play when a match approval input is received from the player and/or the opposing player, to allow the player and the opposing player to perform a play.

2. The match making method of claim 1, further comprising:
displaying, by a display (142), a match making stand-by player list when receiving the match making request.

3. The match making method of claim 1, wherein the match making request is received through an RFID module.

4. The match making method of claim 1, wherein the electronic dart game device which the player and the opposing player are to play includes one of an electronic dart game device associated with the player and an electronic dart game device associated with the opposing player.

5. The match making method of claim 1, wherein the information associated with the opposing player selected by the match making algorithm includes at least one information of identification information of the opposing player, rating information of the opposing player, class information of the opposing player, point per dart (PPD) information of the opposing player, and mark per round (MPR) information of the opposing player.

6. The match making method of claim 1, wherein the controller (190;405) additionally decides the electronic dart game device which the player and the opposing player are to play at least partially based on the identification information of the opposing player and the positional information of the electronic dart game device.

7. The match making method of claim 1, wherein the controller (190;405) uses the match making algorithm which is at least partially based on at least one of the identification information, the rating information, the class information, the PPD information, and the MPR information of the player and the opposing player.

8. The match making method of claim 1, wherein when the match approval input is not received from the players for a predetermined threshold time, match making is cancelled.

9. The match making method of claim 1, wherein the match approval input includes an RFID input associated with the player.

10. The match making method of claim 1, wherein the match approval input is received by the electronic dart game device which the player and the opposing player are to play.

11. An electronic dart game device (100) including a communication function with an external device, the electronic dart game device comprising:
a player input unit (130) receiving a match making request that was input by a player;
a controller (190;405) receiving and processing information associated with an opposing player selected by a match making algorithm, wherein the controller (190;405) selects the opposing player which is in the same place among players associated with one or more other grouped electronic dart game devices based on electronic dart game device unique identification information and electronic dart game device positional information, and the controller (190;405) selects the electronic dart game device for playing the game together with the selected opposing player at the same place based on the electronic dart game device unique identification information and the electronic dart game device positional information;
an output unit (140) outputting information associated with the electronic dart game device which the player and the opposing player are to play, and
a network connection unit (160) signaling to drive a selected electronic dart game device which the player and the opposing player are to play when a match approval input is received from the player and/or the opposing player, to allow the player and the opposing player to perform a play.

12. A computer-readable medium having stored thereon a computer program which, when executed on a computer including a player input unit (130), a controller (190;405), an output unit (140), and a network connection unit (160), causes the computer to perform match making through communication with an external device, wherein the program includes:
computer code allowing the computer to receive, by the player input unit (130), a match making request that was input by a player;
computer code allowing the computer to receive, by the controller (190;405), information associated with an opposing player selected by a match making algorithm, wherein the controller (190;405) selects the opposing player which is in the same place among players associated with one or more other grouped electronic dart game devices based on electronic dart game device unique identification information and electronic dart game device positional information, and the controller (190;405) selects the electronic dart game device for playing the game together with the selected opposing player in the same place based on the electronic dart game device unique identification information and the electronic dart game device positional information;
computer code allowing the computer to output, by the output unit (140), information associated with the electronic dart game device which the player and the opposing player are to play, and
computer code allowing the computer to signal, by the network connection unit (160), to drive a selected electronic dart game device which the player and the opposing player are to play when a match approval input is received from the player and/or the opposing player, to allow the player and the opposing player to perform a play.

13. A match making method performed by a match making device, the match making method comprising:
receiving, by a receiving unit (403), a match making request that was input by a player from an electronic dart game device;
performing, by a controller (190;405), a match making algorithm for selecting an opposing player which is in the same place among players associated with one or more other grouped electronic dart game devices based on electronic dart game device unique identification information and electronic dart game device positional information and selecting the electronic dart game device for playing the game together with the selected opposing player in the same place based on the electronic dart game device unique identification information and the electronic dart game device positional information;
transmitting, by a transmitting unit (409), information associated with the electronic dart game device which the player and the opposing player are to play to a selected electronic dart game device, and
signaling, by the transmitting unit (409), to drive the selected electronic dart game device which the player and the opposing player are to play when a match approval input is received from the player and/or the opposing player, to allow the player and the opposing player to perform a play.

14. A match making device comprising:
a receiving unit (403) receiving a match making request that was input by a player from an electronic dart game device;
a controller (190;405) performing a match making algorithm for selecting an opposing player which is in the same place among players associated with one or more other grouped electronic dart game devices based on electronic dart game device unique identification information and electronic dart game device positional information and selecting the electronic dart game device for playing the game together with the selected opposing player in the same place based on the electronic dart game device unique identification information and the electronic dart game device positional information; and
a transmitting unit (409) transmitting information associated with the electronic dart game device which the player and the opposing player are to play to a selected electronic dart game device, signaling to drive the selected electronic dart game device which the player and the opposing player are to play when a match approval input is received from the player and/or the opposing player, to allow the player and the opposing player to perform a play.

15. A computer-readable medium having stored thereon a computer program which, when executed on a computer including a receiving unit (403), a controller (190;405), and a transmitting unit (409), causes the computer to perform match making, wherein the program includes:
computer code allowing the computer to receive, by the receiving unit (403), a match making request that was input by a player from an electronic dart game device;
computer code allowing the computer to perform, by the controller (190;405), a match making algorithm for selecting an opposing player which is in the same place among players associated with one or more other grouped electronic dart game devices based on electronic dart game device unique identification information and electronic dart game device positional information and selecting the electronic dart game device for playing the game together with the selected opposing player in the same place based on the electronic dart game device unique identification information and the electronic dart game device positional information;
computer code allowing the computer to transmit, by the transmitting unit (409), to a selected electronic dart game device information associated with the electronic dart game device which the player and the opposing player are to play; and
computer code allowing the computer to signal, by the transmitting unit (409), to drive the selected electronic dart game device which the player and the opposing player are to play when a match approval input is received from the player and/or the opposing player, to allow the player and the opposing player to perform a play.

## Patentansprüche

1. Spielvermittlungsverfahren in einer elektronischen Dartspielvorrichtung (100), die eine Kommunikationsfunktion mit einer externen Vorrichtung beinhaltet, wobei das Verfahren Folgendes umfasst:
Empfangen, durch eine Spielereingabeeinheit (130), einer Spielvermittlungsanfrage, die von einem Spieler eingegeben wurde;
Empfangen, durch eine Steuereinheit (190; 405), von Informationen, die einem gegnerischen Spieler zugeordnet sind, der von einem Spielvermittlungsalgorithmus ausgewählt wurde,
wobei die Steuereinheit (190; 405) den gegnerischen Spieler, der sich am selben Ort befindet, unter den Spielern, die einer oder mehreren anderen gruppierten elektronischen Dartspielvorrichtungen zugeordnet sind, basierend auf eindeutigen Identifikationsinformationen einer elektronischen Dartspielvorrichtung und Positionsinformationen einer elektronischen Dartspielvorrichtung auswählt, und wobei die Steuereinheit (190; 405) die elektronische Dartspielvorrichtung zum Spielen des Spiels zusammen mit dem ausgewählten gegnerischen Spieler am selben Ort basierend auf den eindeutigen Identifikationsinformationen der elektronischen Dartspielvorrichtung und den Positionsinformationen der elektronischen Dartspielvorrichtung auswählt;
Ausgeben, durch eine Ausgabeeinheit (140), von Informationen, die der elektronischen Dartspielvorrichtung zugeordnet sind, mit der der Spieler und der gegnerische Spieler spielen sollen, und
Signalisieren, durch eine Netzwerkverbindungseinheit (160), um eine ausgewählte elektronische Dartspielvorrichtung anzusteuern, mit der der Spieler und der gegnerische Spieler spielen sollen, wenn eine Spielbestätigungseingabe von dem Spieler und/oder dem gegnerischen Spieler empfangen wird, um es dem Spieler und dem gegnerischen Spieler zu ermöglichen, ein Spiel durchzuführen.

2. Spielvermittlungsverfahren nach Anspruch 1, weiter umfassend:
Anzeigen, durch eine Anzeige (142), einer Spielvermittlungs-Bereitschaftsspielerliste, wenn die Spielvermittlungsanfrage empfangen wird.

3. Spielvermittlungsverfahren nach Anspruch 1, wobei die Spielvermittlungsanfrage über ein RFID-Modul empfangen wird.

4. Spielvermittlungsverfahren nach Anspruch 1, wobei die elektronische Dartspielvorrichtung, mit der der Spieler und der gegnerische Spieler spielen sollen, entweder eine dem Spieler zugeordnete elektronische Dartspielvorrichtung oder eine dem gegnerischen Spieler zugeordnete elektronische Dartspielvorrichtung beinhaltet.

5. Spielvermittlungsverfahren nach Anspruch 1, wobei die Informationen, die dem gegnerischen Spieler zugeordnet sind, der von dem Spielvermittlungsalgorithmus ausgewählt wurde, mindestens eine Information von Identifikationsinformationen des gegnerischen Spielers, Bewertungsinformationen des gegnerischen Spielers, Klasseninformationen des gegnerischen Spielers, Point-per-Dart- (PPD) -Informationen des gegnerischen Spielers und Marks-per-Round- (MPR) -Informationen des gegnerischen Spielers beinhalten.

6. Spielvermittlungsverfahren nach Anspruch 1, wobei die Steuereinheit (190; 405) zusätzlich zumindest teilweise basierend auf den Identifikationsinformationen des gegnerischen Spielers und den Positionsinformationen der elektronischen Dartspielvorrichtung über die elektronische Dartspielvorrichtung entscheidet, mit der der Spieler und der gegnerische Spieler spielen sollen.

7. Spielvermittlungsverfahren nach Anspruch 1, wobei die Steuereinheit (190; 405) den Spielvermittlungsalgorithmus verwendet, der zumindest teilweise auf den Identifikationsinformationen, den Bewertungsinformationen, den Klasseninformationen, den PPD-Informationen und den MPR-Informationen des Spielers und des gegnerischen Spielers basiert.

8. Spielvermittlungsverfahren nach Anspruch 1, wobei die Spielvermittlung abgebrochen wird, wenn die Spielbestätigungseingabe von den Spielern nicht innerhalb einer vorbestimmten Schwellenzeit empfangen wird.

9. Spielvermittlungsverfahren nach Anspruch 1, wobei die Spielbestätigungseingabe eine dem Spieler zugeordnete RFID-Eingabe beinhaltet.

10. Spielvermittlungsverfahren nach Anspruch 1, wobei die Spielbestätigungseingabe von der elektronischen Dartspielvorrichtung empfangen wird, mit der der Spieler und der gegnerische Spieler spielen sollen.

11. Elektronische Dartspielvorrichtung (100), die eine Kommunikationsfunktion mit einer externen Vorrichtung beinhaltet, wobei die elektronische Dartspielvorrichtung Folgendes umfasst:
eine Spielereingabeeinheit (130), die eine Spielvermittlungsanfrage empfängt, die von einem Spieler eingegeben wurde;
eine Steuereinheit (190; 405), die Informationen empfängt und verarbeitet, die einem gegnerischen Spieler zugeordnet sind, der von einem Spielvermittlungsalgorithmus ausgewählt wurde, wobei die Steuereinheit (190; 405) den gegnerischen Spieler, der sich am selben Ort befindet, unter den Spielern, die einer oder mehreren anderen gruppierten elektronischen Dartspielvorrichtungen zugeordnet sind, basierend auf eindeutigen Identifikationsinformationen der elektronischen Dartspielvorrichtung und Positionsinformationen der elektronischen Dartspielvorrichtung auswählt, und die Steuereinheit (190; 405) die elektronische Dartspielvorrichtung zum Spielen des Spiels zusammen mit dem ausgewählten gegnerischen Spieler am selben Ort basierend auf den eindeutigen Identifikationsinformationen der elektronischen Dartspielvorrichtung und den Positionsinformationen der elektronischen Dartspielvorrichtung auswählt;
eine Ausgabeeinheit (140), die Informationen ausgibt, die der elektronischen Dartspielvorrichtung zugeordnet sind, mit der der Spieler und der gegnerische Spieler spielen sollen, und
eine Netzwerkverbindungseinheit (160), die signalisiert, eine ausgewählte elektronische Dartspielvorrichtung anzusteuern, mit der der Spieler und der gegnerische Spieler spielen sollen, wenn eine Spielbestätigungseingabe von dem Spieler und/oder dem gegnerischen Spieler empfangen wird, um es dem Spieler und dem gegnerischen Spieler zu ermöglichen, ein Spiel durchzuführen.

12. Computerlesbares Medium, das ein Computerprogramm darauf gespeichert aufweist, das, wenn es auf einem Computer ausgeführt wird, der eine Spielereingabeeinheit (130), eine Steuereinheit (190; 405), eine Ausgabeeinheit (140) und eine Netzwerkverbindungseinheit (160) beinhaltet, den Computer veranlasst, durch Kommunikation mit einer externen Vorrichtung eine Spielvermittlung durchzuführen, wobei das Programm Folgendes beinhaltet:
Computercode, der es dem Computer ermöglicht, durch die Spielereingabeeinheit (130) eine Spielvermittlungsanfrage zu empfangen, die von einem Spieler eingegeben wurde;
Computercode, der es dem Computer ermöglicht, durch die Steuereinheit (190; 405) Informationen zu empfangen, die einem gegnerischen Spieler zugeordnet sind, der von einem Spielvermittlungsalgorithmus ausgewählt wurde, wobei die Steuereinheit (190; 405) den gegnerischen Spieler, der sich am selben Ort befindet, unter den Spielern, die einer oder mehreren anderen gruppierten elektronischen Dartspielvorrichtungen zugeordnet sind, basierend auf eindeutigen Identifikationsinformationen der elektronischen Dartspielvorrichtung und Positionsinformationen der elektronischen Dartspielvorrichtung auswählt, und die Steuereinheit (190; 405) die elektronische Dartspielvorrichtung zum Spielen des Spiels zusammen mit dem ausgewählten gegnerischen Spieler am selben Ort basierend auf den eindeutigen Identifikationsinformationen der elektronischen Dartspielvorrichtung und den Positionsinformationen der elektronischen Dartspielvorrichtung auswählt;
Computercode, der es dem Computer ermöglicht, durch eine Ausgabeeinheit (140) Informationen auszugeben, die der elektronischen Dartspielvorrichtung zugeordnet sind, mit der der Spieler und der gegnerische Spieler spielen sollen, und
Computercode, der es dem Computer ermöglicht, durch die Netzwerkverbindungseinheit (160) zu signalisieren, eine ausgewählte elektronische Dartspielvorrichtung anzusteuern, mit der der Spieler und der gegnerische Spieler spielen sollen, wenn eine Spielbestätigungseingabe von dem Spieler und/oder dem gegnerischen Spieler empfangen wird, um es dem Spieler und dem gegnerischen Spieler zu ermöglichen, ein Spiel durchzuführen.

13. Spielvermittlungsverfahren, das von einer Spielvermittlungsvorrichtung durchgeführt wird, wobei das Spielvermittlungsverfahren Folgendes umfasst:
Empfangen, durch eine Empfangseinheit (403), einer Spielvermittlungsanfrage, die von einem Spieler über eine elektronische Dartspielvorrichtung eingegeben wurde;
Durchführen, durch eine Steuereinheit (190; 405), eines Spielvermittlungsalgorithmus zum Auswählen eines gegnerischen Spielers, der sich am selben Ort befindet, unter den Spielern, die einer oder mehreren anderen gruppierten elektronischen Dartspielvorrichtungen zugeordnet sind, basierend auf eindeutigen Identifikationsinformationen der elektronischen Dartspielvorrichtung und elektronischen Positionsinformationen der Dartspielvorrichtung, und Auswählen der elektronischen Dartspielvorrichtung zum Spielen des Spiels zusammen mit dem ausgewählten gegnerischen Spieler am selben Ort basierend auf den eindeutigen Identifikationsinformationen der elektronischen Dartspielvorrichtung und den Positionsinformationen der elektronischen Dartspielvorrichtung;
Senden, durch eine Sendeeinheit (409), von Informationen, die der elektronischen Dartspielvorrichtung zugeordnet sind, mit der der Spieler und der gegnerische Spieler spielen sollen, an eine ausgewählte elektronische Dartspielvorrichtung, und
Signalisieren, durch die Sendeeinheit (409), die ausgewählte elektronische Dartspielvorrichtung anzusteuern, mit der der Spieler und der gegnerische Spieler spielen sollen, wenn eine Spielbestätigungseingabe von dem Spieler und/oder dem gegnerischen Spieler empfangen wird, um es dem Spieler und dem gegnerischen Spieler zu ermöglichen, ein Spiel durchzuführen.

14. Spielvermittlungsvorrichtung, umfassend:
eine Empfangseinheit (403), die eine Spielvermittlungsanfrage empfängt, die von einem Spieler über eine elektronische Dartspielvorrichtung eingegeben wurde;
eine Steuereinheit (190; 405), die einen Spielvermittlungsalgorithmus zum Auswählen eines gegnerischen Spielers, der sich am selben Ort befindet, unter den Spielern, die einer oder mehreren anderen gruppierten elektronischen Dartspielvorrichtungen zugeordnet sind, basierend auf eindeutigen Identifikationsinformationen der elektronischen Dartspielvorrichtung und elektronischen Positionsinformationen der Dartspielvorrichtung, und Auswählen der elektronischen Dartspielvorrichtung zum Spielen des Spiels zusammen mit dem ausgewählten gegnerischen Spieler am selben Ort basierend auf den eindeutigen Identifikationsinformationen der elektronischen Dartspielvorrichtung und den Positionsinformationen der elektronischen Dartspielvorrichtung durchführt;
eine Sendeeinheit (409), die Informationen, die der elektronischen Dartspielvorrichtung zugeordnet sind, mit der der Spieler und der gegnerische Spieler spielen sollen, an eine ausgewählte elektronische Dartspielvorrichtung sendet, wobei sie signalisiert, die ausgewählte elektronische Dartspielvorrichtung anzusteuern, mit der der Spieler und der gegnerische Spieler spielen sollen, wenn eine Spielbestätigungseingabe von dem Spieler und/oder dem gegnerischen Spieler empfangen wird, um es dem Spieler und dem gegnerischen Spieler zu ermöglichen, ein Spiel durchzuführen.

15. Computerlesbares Medium, das ein Computerprogramm darauf gespeichert aufweist, das, wenn es auf einem Computer ausgeführt wird, der eine Empfangseinheit (403), eine Steuereinheit (190; 405) und eine Sendeeinheit (409) beinhaltet, den Computer dazu veranlasst, Spielvermittlung durchzuführen, wobei das Programm Folgendes beinhaltet:
Computercode, der es dem Computer ermöglicht, durch die Empfangseinheit (403) eine Spielvermittlungsanfrage zu empfangen, die von einem Spieler über eine elektronische Dartspielvorrichtung eingegeben wurde;
Computercode, der es dem Computer ermöglicht, durch die Steuereinheit (190; 405) einen Spielvermittlungsalgorithmus zum Auswählen eines gegnerischen Spielers, der sich am selben Ort befindet, unter Spielern, die einer oder mehreren anderen gruppierten elektronischen Dartspielvorrichtungen zugeordnet sind, basierend auf eindeutigen Identifikationsinformationen der elektronischen Dartspielvorrichtung und Positionsinformationen der elektronischen Dartspielvorrichtung und zum Auswählen der elektronischen Dartspielvorrichtung zum Spielen des Spiels zusammen mit dem ausgewählten gegnerischen Spieler am selben Ort basierend auf den eindeutigen Identifikationsinformationen der elektronischen Dartspielvorrichtung und den Positionsinformationen der elektronischen Dartspielvorrichtung durchzuführen;
Computercode, der es dem Computer ermöglicht, durch die Sendeeinheit (409) Informationen, die der elektronischen Dartspielvorrichtung zugeordnet sind, mit der der Spieler und der gegnerische Spieler spielen sollen, an eine ausgewählte elektronische Dartspielvorrichtung zu senden; und
Computercode, der es dem Computer ermöglicht, durch die Sendeeinheit (409) zu signalisieren, die ausgewählte elektronische Dartspielvorrichtung anzusteuern, mit der der Spieler und der gegnerische Spieler spielen sollen, wenn eine Spielbestätigungseingabe von dem Spieler und/oder dem gegnerischen Spieler empfangen wird, um es dem Spieler und dem gegnerischen Spieler zu ermöglichen, ein Spiel durchzuführen.

## Revendications

1. Procédé de réalisation de partie dans un dispositif de jeu de fléchettes électronique (100) comprenant une fonction de communication avec un dispositif externe, le procédé comprenant :
recevoir, par une unité d'entrée de joueur (130), une demande de réalisation de partie qui a été entrée par un joueur ;
recevoir, par un dispositif de commande (190 ; 405), des informations associées à un joueur adverse sélectionné par un algorithme de réalisation de partie,
dans lequel le dispositif de commande (190 ; 405) sélectionne le joueur adverse qui se trouve au même endroit parmi des joueurs associés à un ou plusieurs autres dispositifs de jeu de fléchettes électroniques groupés, sur la base d'informations d'identification unique de dispositif de jeu de fléchettes électronique et d'informations de position de dispositif de jeu de fléchettes électronique, et dans lequel le dispositif de commande (190 ; 405) sélectionne le dispositif de jeu de fléchettes électronique pour jouer au jeu conjointement avec le joueur adverse sélectionné au même endroit, sur la base des informations d'identification unique de dispositif de jeu de fléchettes électronique et des informations de position de dispositif de jeu de fléchettes électronique ;
délivrer, par une unité de sortie (140), des informations associées au dispositif de jeu de fléchettes électronique auquel le joueur et le joueur adverse doivent jouer, et
signaler, par une unité de connexion réseau (160), d'actionner un dispositif de jeu de fléchettes électronique sélectionné auquel le joueur et le joueur adverse doivent jouer lorsqu'une entrée d'approbation de partie est reçue en provenance du joueur et/ou du joueur adverse, de façon à permettre au joueur et au joueur adverse de réaliser une partie.

2. Procédé de réalisation de partie selon la revendication 1, comprenant en outre :
afficher, par un dispositif d'affichage (142), une liste de joueurs en attente de réalisation de partie lors de la réception de la demande de réalisation de partie.

3. Procédé de réalisation de partie selon la revendication 1, dans lequel la demande de réalisation de partie est reçue par l'intermédiaire d'un module RFID.

4. Procédé de réalisation de partie selon la revendication 1, dans lequel le dispositif de jeu de fléchettes électronique auquel le joueur et le joueur adverse doivent jouer comprend l'un parmi un dispositif de jeu de fléchettes électronique associé au joueur et un dispositif de jeu de fléchettes électronique associé au joueur adverse.

5. Procédé de réalisation de partie selon la revendication 1, dans lequel les informations associées au joueur adverse sélectionné par l'algorithme de réalisation de partie comprennent au moins un type d'informations parmi des informations d'identification du joueur adverse, des informations de classement du joueur adverse, des informations de catégorie du joueur adverse, des informations de points par fléchette (PPD) du joueur adverse et des informations de marques par tour (MPR) du joueur adverse.

6. Procédé de réalisation de partie selon la revendication 1, dans lequel le dispositif de commande (190 ; 405) décide en outre du dispositif de jeu de fléchettes électronique sur lequel le joueur et le joueur adverse doivent jouer, au moins en partie sur la base des informations d'identification du joueur adverse et des informations de position du dispositif de jeu de fléchettes électronique.

7. Procédé de réalisation de partie selon la revendication 1, dans lequel le dispositif de commande (190 ; 405) utilise l'algorithme de réalisation de partie qui est au moins partiellement basé sur au moins un type d'informations parmi des informations d'identification, des informations de classement, des informations de catégorie, des informations de PPD et des informations de MPR du joueur et du joueur adverse.

8. Procédé de réalisation de partie selon la revendication 1, dans lequel, lorsque l'entrée d'approbation de partie n'est pas reçue en provenance des joueurs pendant une durée de seuil prédéterminée, la réalisation de partie est annulée.

9. Procédé de réalisation de partie selon la revendication 1, dans lequel l'entrée d'approbation de partie comprend une entrée RFID associée au joueur.

10. Procédé de réalisation de partie selon la revendication 1, dans lequel l'entrée d'approbation de partie est reçue par le dispositif de jeu de fléchettes électronique auquel le joueur et le joueur adverse doivent jouer.

11. Dispositif de jeu de fléchettes électronique (100) comprenant une fonction de communication avec un dispositif externe, le dispositif de jeu de fléchettes électronique comprenant :
une unité d'entrée de joueur (130) recevant une demande de réalisation de partie qui a été entrée par un joueur ;
un dispositif de commande (190 ; 405) recevant et traitant des informations associées à un joueur adverse sélectionné par un algorithme de réalisation de partie, le dispositif de commande (190 ; 405) sélectionnant le joueur adverse qui se trouve au même endroit parmi des joueurs associés à un ou plusieurs autres dispositifs de jeu de fléchettes électroniques groupés, sur la base d'informations d'identification unique de dispositif de jeu de fléchettes électronique et d'informations de position de dispositif de jeu de fléchettes électronique, et le dispositif de commande (190 ; 405) sélectionnant le dispositif de jeu de fléchettes électronique pour jouer au jeu conjointement avec le joueur adverse sélectionné au même endroit sur la base des informations d'identification unique de dispositif de jeu de fléchettes électronique et des informations de position de dispositif de jeu de fléchettes électronique ;
une unité de sortie (140) délivrant des informations associées au dispositif de jeu de fléchettes électronique auquel le joueur et le joueur adverse doivent jouer, et
une unité de connexion réseau (160) signalant d'actionner un dispositif de jeu de fléchettes électronique sélectionné auquel le joueur et le joueur adverse doivent jouer lorsqu'une entrée d'approbation de partie est reçue en provenance du joueur et/ou du joueur adverse, de façon à permettre au joueur et au joueur adverse de réaliser une partie.

12. Support lisible par ordinateur sur lequel est stocké un programme d'ordinateur qui, lorsqu'il est exécuté sur un ordinateur comprenant une unité d'entrée de joueur (130), un dispositif de commande (190 ; 405), une unité de sortie (140) et une unité de connexion réseau (160), amène l'ordinateur à effectuer une réalisation de partie par l'intermédiaire d'une communication avec un dispositif externe, dans lequel le programme comprend :
un code informatique permettant à l'ordinateur de recevoir, par l'unité d'entrée de joueur (130), une demande de réalisation de partie qui a été entrée par un joueur ;
un code informatique permettant à l'ordinateur de recevoir, par le dispositif de commande (190 ; 405), des informations associées à un joueur adverse sélectionné par un algorithme de réalisation de partie, le dispositif de commande (190 ; 405) sélectionnant le joueur adverse qui se trouve au même endroit parmi des joueurs associés à un ou plusieurs autres dispositifs de jeu de fléchettes électroniques groupés, sur la base d'informations d'identification unique de dispositif de jeu de fléchettes électronique et d'informations de position de dispositif de jeu de fléchettes électronique, et le dispositif de commande (190 ; 405) sélectionnant le dispositif de jeu de fléchettes électronique pour jouer au jeu conjointement avec le joueur adverse sélectionné au même endroit, sur la base des informations d'identification unique de dispositif de jeu de fléchettes électronique et des informations de position de dispositif de jeu de fléchettes électronique ;
un code informatique permettant à l'ordinateur de délivrer, par l'unité de sortie (140), des informations associées au dispositif de jeu de fléchettes électronique auquel le joueur et le joueur adverse doivent jouer, et
un code informatique permettant à l'ordinateur de signaler, par l'unité de connexion réseau (160), d'actionner un dispositif de jeu de fléchettes électronique sélectionné auquel le joueur et le joueur adverse doivent jouer lorsqu'une entrée d'approbation de partie est reçue en provenance du joueur et/ou du joueur adverse, de façon à permettre au joueur et au joueur adverse de réaliser une partie.

13. Procédé de réalisation de partie effectué par un dispositif de réalisation de partie, le procédé de réalisation de partie comprenant :
recevoir, par une unité de réception (403), une demande de réalisation de partie qui a été entrée par un joueur à partir d'un dispositif de jeu de fléchettes électronique ;
effectuer, par un dispositif de commande (190 ; 405), un algorithme de réalisation de partie pour sélectionner un joueur adverse qui se trouve au même endroit parmi des joueurs associés à un ou plusieurs autres dispositifs de jeu de fléchettes électroniques groupés, sur la base d'informations d'identification unique de dispositif de jeu de fléchettes électronique et d'informations de position de dispositif de jeu de fléchettes électronique, et sélectionner le dispositif de jeu de fléchettes électronique pour jouer au jeu conjointement avec le joueur adverse sélectionné au même endroit, sur la base des informations d'identification unique de dispositif de jeu de fléchettes électronique et des informations de position de dispositif de jeu de fléchettes électronique ;
transmettre, par une unité de transmission (409), des informations associées au dispositif de jeu de fléchettes électronique auquel le joueur et le joueur adverse doivent jouer à un dispositif de jeu de fléchettes électronique sélectionné, et
signaler, par l'unité de transmission (409), d'actionner le dispositif de jeu de fléchettes électronique sélectionné auquel le joueur et le joueur adverse doivent jouer lorsqu'une entrée d'approbation de partie est reçue en provenance du joueur et/ou du joueur adverse, de façon à permettre au joueur et au joueur adverse de réaliser une partie.

14. Dispositif de réalisation de partie comprenant :
une unité de réception (403) recevant une demande de réalisation de partie qui a été entrée par un joueur à partir d'un dispositif de jeu de fléchettes électronique ;
un dispositif de commande (190 ; 405) effectuant un algorithme de réalisation de partie pour sélectionner un joueur adverse qui se trouve au même endroit parmi des joueurs associés à un ou plusieurs autres dispositifs de jeu de fléchettes électroniques groupés, sur la base d'informations d'identification unique de dispositif de jeu de fléchettes électronique et d'informations de position de dispositif de jeu de fléchettes électronique, et sélectionner le dispositif de jeu de fléchettes électronique pour jouer au jeu conjointement avec le joueur adverse sélectionné au même endroit, sur la base des informations d'identification unique de dispositif de jeu de fléchettes électronique et des informations de position de dispositif de jeu de fléchettes électronique ; et
une unité de transmission (409) transmettant des informations associées au dispositif de jeu de fléchettes électronique auquel le joueur et le joueur adverse doivent jouer à un dispositif de jeu de fléchettes électronique sélectionné, signalant d'actionner le dispositif de jeu de fléchettes électronique sélectionné auquel le joueur et le joueur adverse doivent jouer lorsqu'une entrée d'approbation de partie est reçue en provenance du joueur et/ou du joueur adverse, de façon à permettre au joueur et au joueur adverse de réaliser une partie.

15. Support lisible par ordinateur sur lequel est stocké un programme d'ordinateur qui, lorsqu'il est exécuté sur un ordinateur comprenant une unité de réception (403), un dispositif de commande (190 ; 405) et une unité de transmission (409), amène l'ordinateur à effectuer une réalisation de partie, le programme comprenant :
un code informatique permettant à l'ordinateur de recevoir, par l'unité de réception (403), une demande de réalisation de partie qui a été entrée par un joueur à partir d'un dispositif de jeu de fléchettes électronique ;
un code informatique permettant à l'ordinateur d'effectuer, par le dispositif de commande (190 ; 405), un algorithme de réalisation de partie pour sélectionner un joueur adverse qui se trouve au même endroit parmi des joueurs associés à un ou plusieurs autres dispositifs de jeu de fléchettes électroniques groupés, sur la base d'informations d'identification unique de dispositif de jeu de fléchettes électronique et d'informations de position de dispositif de jeu de fléchettes électronique, et de sélectionner le dispositif de jeu de fléchettes électronique pour jouer au jeu conjointement avec le joueur adverse sélectionné au même endroit, sur la base des informations d'identification unique de dispositif de jeu de fléchettes électronique et des informations de position de dispositif de jeu de fléchettes électronique ;
un code informatique permettant à l'ordinateur de transmettre, par l'unité de transmission (409), à un dispositif de jeu de fléchettes électronique sélectionné, des informations associées au dispositif de jeu de fléchettes électronique auquel le joueur et le j oueur adverse doivent jouer ; et
un code informatique permettant à l'ordinateur de signaler, par l'unité de transmission (409), d'actionner le dispositif de jeu de fléchettes électronique sélectionné auquel le joueur et le joueur adverse doivent jouer lorsqu'une entrée d'approbation de partie est reçue en provenance du joueur et/ou du joueur adverse, de façon à permettre au joueur et au joueur adverse de réaliser une partie.
